# EUROPEAN PATENT APPLICATION

(11) **EP 4 838 567 A1**
(43) Date of publication of application: **11.11.2026**
(21) Application number: 26170813.5
(22) Date of filing: 07.04.2026
(51) Int. Cl.: H01M 4/13, H01M 4/04, H01M 4/62, H01M 4/66, H01M 4/70, H01M 4/139, H01M 4/02

(54) **ELECTRODE AND SECONDARY BATTERY**

(30) Priority: 08.05.2025 JP 2025078138
(71) Applicant: Toyota Jidosha Kabushiki Kaisha, Toyota-shi, Aichi-ken 471-8571 (JP)
(72) Inventor: KAZAMA, Daichi, Toyota-shi, Aichi-ken,, 471-8571 (JP); HE, Yu, Toyota-shi, Aichi-ken,, 471-8571 (JP); UEDA, Masashi, Toyota-shi, Aichi-ken,, 471-8571 (JP); KIDA, Tomohisa, Toyota-shi, Aichi-ken,, 471-8571 (JP); IKEDA, Takenori, Toyota-shi, Aichi-ken,, 471-8571 (JP); KINTSU, Yusuke, Toyota-shi, Aichi-ken,, 471-8571 (JP); SATO, Tomohiro, Toyota-shi, Aichi-ken,, 471-8571 (JP); MIKI, Nariaki, Toyota-shi, Aichi-ken,, 471-8571 (JP)
(74) Representative: Winter, Brandl - Partnerschaft mbB

(57) **Abstract**

An electrode (10) includes: a current collector (11) extending along a longitudinal direction of the current collector (11); and an electrode film (13) disposed on the current collector (11), wherein the electrode film (13) includes active material powders and a fibrillated binder, the electrode film (139) has a first surface (13a) affixed to the current collector (11) and a second surface (13b) located opposite the first surface (13a), wherein the first surface (13a) has a wavy shape in which peaks (R1) and valleys (V1) alternate along the longitudinal direction, wherein the electrode (10) meets a relationship P ≤ T, where P is an average pitch between the peaks (R1) adjacent to each other in the longitudinal direction (D1), and T is an average thickness of the electrode film (13) in a thickness direction (D3) orthogonal to the longitudinal direction (D1).

## Description

### CROSS REFERENCE TO RELATED APPLICATIONS

This nonprovisional application is based on Japanese Patent Application No. 2025-078138 filed on May 8, 2025 with the Japan Patent Office, the entire content of which is hereby incorporated by reference.

### BACKGROUND

### Field

The present disclosure relates to an electrode and a secondary battery.

### Description of the Background Art

As a conventional method of fabrication of an electrode, Japanese Patent Laying-Open No. 2024-140137 discloses a fabrication method including: stacking a positive electrode layer including a positive active material layer and an electrolyte layer including a solid electrolyte to obtain a stack; forming in the stack recesses and protrusions extending from one side to the other side of a plane direction of the stack; and planarizing the recesses and the protrusions, while applying a pressure to the stack in a direction of thickness of the stack.

### SUMMARY

One method of fabrication of an electrode for use in a secondary battery is by affixing an electrode film, previously formed into a film, onto a surface of a current collector. In a process for forming a mixture layer into a film, at least one primary surface of the electrode film in the direction of thickness of the electrode film may be textured due to roll forming, roll-to-roll transfer, roll transfer, etc. Associated with this texture, cracks extending in the in-plane direction may be formed within the electrode film. Longer cracks cause a lower strength of the electrode film, which, in turn, cause a lower strength of the electrode.

The present disclosure is made in view of the problem as noted above, and an object of the present disclosure is to provide an electrode and a secondary battery which can inhibit the reduction in strength of the electrode film due to cracks.

An electrode according to the present disclosure includes: a current collector extending along a longitudinal direction of the current collector; and an electrode film disposed on the current collector. The electrode film includes active material powders and a fibrillated binder. The electrode film has a first surface affixed to the current collector and a second surface located opposite the first surface. The first surface has a wavy shape in which peaks and valleys alternate along the longitudinal direction. The electrode meets a relationship P ≤ T, where P is an average pitch between the peaks adjacent to each other in the longitudinal direction, and T is an average thickness of the electrode film in a thickness direction of the electrode orthogonal to the longitudinal direction.

According to the above configuration, an average pitch between adjacent peak portions of the wavy first surface of the electrode film is less than or equal to an average thickness of the electrode film, which allows reduction of the lengths of cracks that are developed, due to the peaks and the valleys, in the electrode film along the longitudinal direction, thereby inhibiting the reduction in strength of the electrode film.

A secondary battery according to the present disclosure includes: an electrode assembly including the electrode described above; and a housing case accommodating the electrode assembly.

According to the above configuration, a secondary battery can be provided, which includes an electrode assembly using the electrode whose electrode film is inhibited from decreasing in strength.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic cross sectional view of a secondary battery according to an embodiment.
Fig. 2 is a schematic plan view of an expanded positive electrode according to the embodiment.
Fig. 3 is a cross-sectional view of the positive electrode according to the embodiment.
Fig. 4 is a schematic view illustrating a process of fabrication of the positive electrode according to the embodiment.
Fig. 5 is a schematic view illustrating a process of forming a positive electrode film for use in the positive electrode according to the embodiment.

### DESCRIPTION OF THE PREFERRED EMBODIMENTS

Hereinafter, an embodiment according to the present disclosure will be described, with reference to the accompanying drawings. Note that the embodiment below uses the same reference signs to refer to the same or common parts, and description thereof will not be repeated.

### (Secondary Battery)

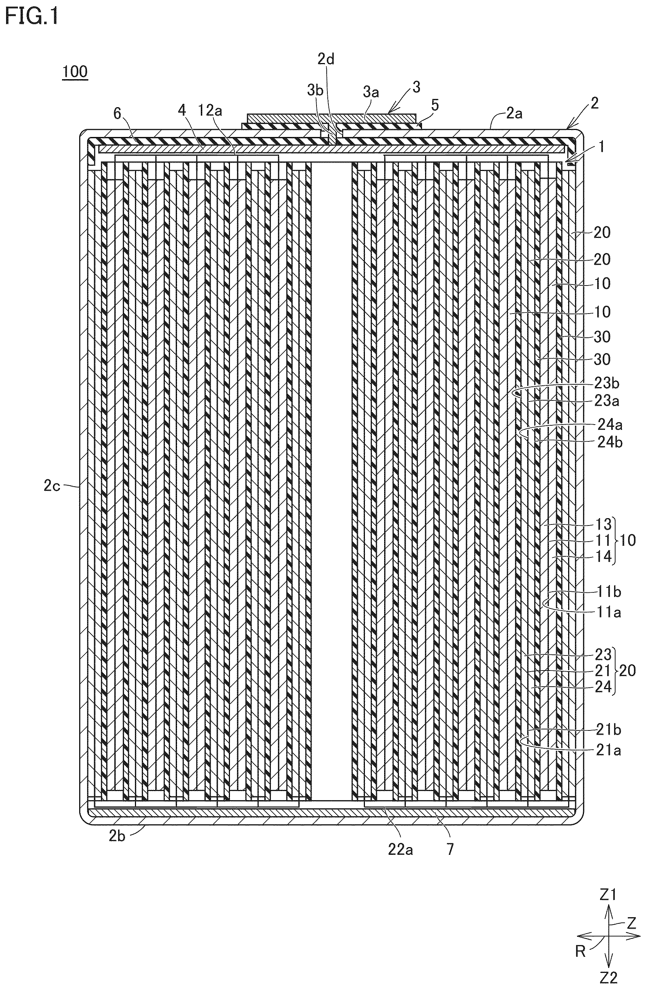

Fig. 1 is a schematic cross sectional view of a secondary battery according to the embodiment. Referring to Fig. 1, a secondary battery 100 according to the embodiment is now described.

Secondary battery 100 is, for example, a lithium-ion battery that is mounted on a vehicle. Note that the application and type of secondary battery 100 is not limited to the above example.

Secondary battery 100 according to Embodiment 1 includes a wound electrode assembly 1, a case 2, a positive terminal 3, a positive current collector plate 4, an external gasket 5, an internal gasket 6, and a negative current collector plate 7.

Wound electrode assembly 1 is spirally wound. Wound electrode assembly 1 is accommodated in case 2. Case 2 has a cylindrical shape. In other others, secondary battery 100 is a cylindrical battery.

Wound electrode assembly 1 includes a positive electrode 10, a negative electrode 20, and a separator 30. Separator 30 is disposed between positive electrode 10 and negative electrode 20 in a radial direction R of wound electrode assembly 1. Separator 30 separates positive electrode 10 and negative electrode 20 from each other. Meanwhile, separator 30 is configured to allow ions (e.g., lithium-ions) to traverse between positive electrode 10 (more specifically, a positive active material) and negative electrode 20 (more specifically, a negative active material).

Wound electrode assembly 1 is configured of a group of electrode plates, in which the positive electrode 10 and negative electrode 20 are wound together via separator 30. Note that the positive electrode 10 and negative electrode 20 according to the present embodiment are those used in wound electrode assembly 1 and have different polarities. One of positive electrode 10 and negative electrode 20 corresponds to a first electrode, and the other one of positive electrode 10 and the negative electrode corresponds to a second electrode.

Case 2 has an upper surface 2a, a lower surface 2b, and a circumferential surface 2c. Upper surface 2a is located on one side of the axial direction of the cylindrical shape of case 2. Upper surface 2a is located on one side Z1 of an axial direction Z of wound electrode assembly 1, as viewed from wound electrode assembly 1. Lower surface 2b is located on the other side Z2 of the axial direction of the cylindrical shape of case 2. Lower surface 2b is located on the other side of axial direction Z of wound electrode assembly 1, as viewed from wound electrode assembly 1. Circumferential surface 2c has a tubular outline. Circumferential surface 2c connects upper surface 2a and lower surface 2b. Case 2 is formed of copper or aluminum, for example.

Note that the case 2 accommodates an electrolyte solution (not shown) too. If wound electrode assembly 1 is an all-solid-state battery , on the other hand, the electrolyte solution can be omitted.

Case 2 has a height dimension (the dimension in axial direction Z) of, for example, 50 mm or greater, 60 mm or greater, 70 mm or greater, or 80 mm or greater. The greater the height dimension (the dimension in axial direction Z) of case 2, the greater the storage battery capacity of secondary battery 100. The height dimension (the dimension in axial direction Z) of case 2 is, for example, 150 mm or less, 100 mm or less, or 80 mm or less. The less the dimension in axial direction Z (the height dimension) of case 2, the lower the profile of a module accommodating the secondary batteries 100 can be.

Case 2 has a diameter dimension (the dimension in radial direction R) of for example, 15 mm or greater, 20 mm or greater, 25 mm or greater, 30 mm or greater, 40 mm or greater, 45 mm or greater, or 46 mm or greater. The greater the diameter dimension (the maximum dimension in radial direction R) of case 2, the greater the storage battery capacity of secondary battery 100. Case 2 has a diameter dimension (the dimension in radial direction R) of, for example, 100 mm or less, 75 mm or less, 50 mm or less, or 46 mm or less. The less the diameter dimension (the dimension in radial direction R) of case 2 has, the more densely the secondary batteries 100 can be disposed in the module.

Positive terminal 3 is located on one side Z1 of axial direction Z, relative to wound electrode assembly 1. Positive terminal 3 includes a disk portion 3a and a riveting portion 3b. Riveting portion 3b is connected to disk portion 3a. Riveting portion 3b extends from the center of disk portion 3a to the other side Z2 of axial direction Z. Note that the positive terminal 3 is formed of aluminum. Disk portion 3a is disposed on upper surface 2a of case 2. Upper surface 2a of case 2 has a through-hole 2d. Riveting portion 3b extends from disk portion 3a, external to case 2, into case 2 through through-hole 2d.

Positive current collector plate 4 is accommodated in case 2. Positive current collector plate 4 is located on one side Z1 of axial direction Z, relative to wound electrode assembly 1. Positive current collector plate 4 is welded to a mixture non-forming portion 12a of positive electrode 10. This positively charges positive current collector plate 4. Positive current collector plate 4 is welded to the end of riveting portion 3b on the other side Z2 of axial direction Z. This positively charges positive terminal 3.

External gasket 5 is disposed between disk portion 3a of positive terminal 3 and upper surface 2a of case 2. This electrically insulates positive terminal 3 and case 2 from each other.

Internal gasket 6 is disposed between case 2 and positive current collector plate 4 in case 2. This electrically insulates case 2 and positive current collector plate 4 from each other. Note that the riveting portion 3b passes through internal gasket 6 and is, thereby, in contact with positive current collector plate 4.

Negative current collector plate 7 is accommodated in case 2. Negative current collector plate 7 is located on the other side Z2 of axial direction Z, relative to wound electrode assembly 1. Negative current collector plate 7 is welded to a mixture non-forming portion 22a of negative electrode 20. This negatively charges negative current collector plate 7. Negative current collector plate 7 is in contact with case 2. Specifically, negative current collector plate 7 is in contact with lower surface 2b and circumferential surface 2c. This negatively charges case 2. Specifically, upper surface 2a is negatively charged.

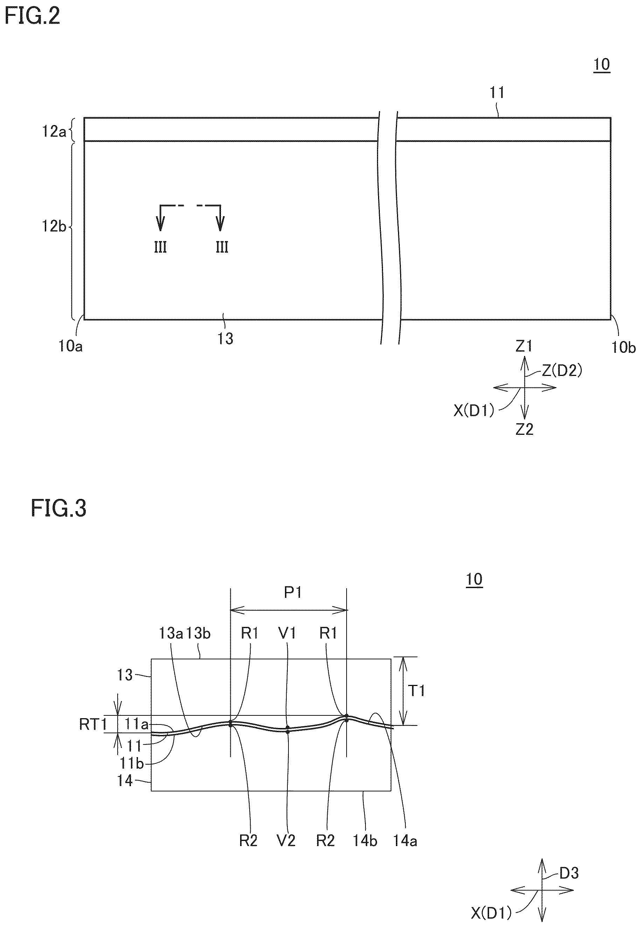

Fig. 2 is a schematic plan view of an expanded positive plate included in the wound electrode assembly according to the embodiment. Fig. 3 is a schematic cross sectional view of a positive plate included in the wound electrode assembly according to the embodiment. Note that Fig. 3 is a cross-sectional view taken along a III-III line shown in Fig. 2. Referring to Figs. 2 and 3, positive electrode 10 according to the embodiment is now described.

Positive electrode 10, when expanded, has a belt-like shape extending along a longitudinal direction D1 (lengthwise). Longitudinal direction D1 is orthogonal to thickness direction D3 of positive electrode 10 described below. Positive electrode 10 has a first end 10a and a second end 10b in longitudinal direction D1. First end 10a is the end (the inner peripheral end of the winding) located on the inner peripheral side of wound electrode assembly 1. Second end 10b is the end (the outer peripheral end of the winding) located on the outer peripheral side of wound electrode assembly 1.

Positive electrode 10 includes a positive current collector 11, a first cathode film 13, and a second cathode film 14. For example, positive current collector 11 is configured of a metallic foil such as aluminum. Positive current collector 11 has a wavy shape of a series of recesses and protrusions in longitudinal direction D1.

Positive current collector 11 has a first primary surface 11a and a second primary surface 11b aligned in thickness direction D3. First primary surface 11a is located on one side of positive current collector 11 in thickness direction D3. Second primary surface 11b is located on the other side of positive current collector 11 in thickness direction D3. In the state of wound electrode assembly 1, that is, when positive electrode 10 is wound, first primary surface 11a faces the inner peripheral side of wound electrode assembly 1, and second primary surface 11b faces the outer peripheral side of wound electrode assembly 1. First primary surface 11a has a wavy shape along a first surface 13a of first cathode film 13 described below. Second primary surface 11b has a wavy shape along a second surface 13b of second cathode film 14 described below.

Positive electrode 10 has a mixture non-forming portion 12a and a mixture forming portion 12b. In mixture non-forming portion 12a, positive current collector 11 is exposed from both first cathode film 13 and second cathode film 14. Both first cathode film 13 and second cathode film 14 are formed in mixture forming portion 12b of positive electrode 10. Mixture non-forming portion 12a extends from mixture forming portion 12b to one side of width direction D2. Mixture non-forming portion 12a, being wound, is exposed from mixture forming portion 12b to one side Z1 of axial direction Z of wound electrode assembly 1.

First cathode film 13 is disposed on first primary surface 11a. First cathode film 13 is disposed on first primary surface 11a so that the first primary surface 11a on one side of the width direction D2 orthogonal to longitudinal direction D1 is exposed. Note that the width direction D2 is in parallel to axial direction Z of wound electrode assembly 1.

First cathode film 13 has first surface 13a affixed to positive current collector 11 and second surface 13b located opposite the first surface 13a. Second surface 13b is a flat surface.

First surface 13a has a wavy shape in which the peaks R1 and valleys V1 alternate along longitudinal direction D1. Peaks R1 recede into the second surface 13b. Valleys V1 protrude in a direction away from the second surface 13b.

First cathode film 13 meets a relationship P1 ≤ T1, where P1 is an average pitch between adjacent peaks R1 in longitudinal direction D1, and T1 is an average thickness of first cathode film 13 orthogonal to longitudinal direction D1. This allows reduction of the lengths of cracks that are developed, due to peaks R1 and valleys V1, in first cathode film 13 along longitudinal direction D1, thereby inhibiting the reduction in strength of first cathode film 13.

A relationship 0.1T1 ≤ P1 may further be met. This can inhibit average pitch P1 between peaks R1 from getting too small.

The above P1 and T1 can be calculated by SEM observation of the cross section of positive electrode 10, which is parallel to thickness direction D3 and longitudinal direction D1. Specifically, five sets of peaks R1 adjacent to each other in longitudinal direction D1 are selected in the observed cross section, and the above P1 is an average pitch between the five sets of peaks R1 in longitudinal direction D1. Moreover, the above T1 is an average of the thicknesses of the five peaks R1 of first cathode film 13 and the thicknesses of five valleys V1 of first cathode film 13. While five portions are selected to calculate P1 and T1 in the above description, it should be noted that the present disclosure is not limited thereto. Other numbers may be appropriately set.

The above first cathode film 13 further meets a relationship 0.1T1 ≤ RT1 ≤ 0.5T1, where RT1 is the maximum distance between peaks R1 and valleys V1 in thickness direction D3 orthogonal to longitudinal direction D1. This allows more effective reduction of the lengths of cracks that are developed, due to peaks R1 and valleys V1, in first cathode film 13 along longitudinal direction D1, thereby further inhibiting the reduction in strength of first cathode film 13.

RT1 is, for example, the maximum distance between peaks R1 and valleys V1 in thickness direction D3 in the same field of view in the observed cross section. However, the present disclosure is not limited thereto. If multiple cross sections are observed, RT1 may be an average of the maximum distances between peaks R1 and valleys V1 in thickness direction D3 observed at the observed cross sections. Alternatively, the largest value of the maximum distances observed at multiple cross sections may be employed as RT1.

Second cathode film 14 is disposed on second primary surface 11b. Second cathode film 14 is disposed on second primary surface 11b so that the second primary surface 11b on one side of width direction D2 orthogonal to longitudinal direction D1 is exposed. Note that the width direction D2 is parallel to axial direction Z of wound electrode assembly 1.

Second cathode film 14 has a first surface 14a affixed to positive current collector 11 and a second surface 14b located opposite the first surface 14a. Second surface 14b is a flat surface.

First surface 14a has a wavy shape in which the peaks R2 and valleys V2 alternate along longitudinal direction D1. Peaks R2 protrude in a direction away from second surface 14b. Valleys V2 recede into second surface 14b.

Second cathode film 14 also meets a relationship P2 ≤ T2, where P2 is an average pitch between peaks R2 adjacent to each other in longitudinal direction D1, and T2 is an average thickness of second cathode film 14 in thickness direction D3 orthogonal to longitudinal direction D1. This allows reduction of the length of cracks that are developed, due to peaks R1 and valleys V1, in second cathode film 14 along longitudinal direction D1, thereby inhibiting the reduction in strength of second cathode film 14.

A relationship 0.1T2 ≤ P2 may further be met. This can inhibit average pitch P2 between peaks R2 from getting too small.

The above P2 and T2 of second cathode film 14 can be calculated in the same manner as the calculation of P1 and T1 described above. Second cathode film 14 further meets a relationship 0.1T2 ≤ RT2 ≤ 0.5T2, where RT2 is the maximum distance between peaks R2 and valleys V2 in thickness direction D3. This allows more effective reduction of the lengths of cracks that are developed in second cathode film 14 along longitudinal direction D1 due to peaks R2 and valleys V2, thereby further inhibiting the reduction in strength of second cathode film 14.

RT2 of second cathode film 14 can be calculated in the same manner as the calculation of RT1 described above.

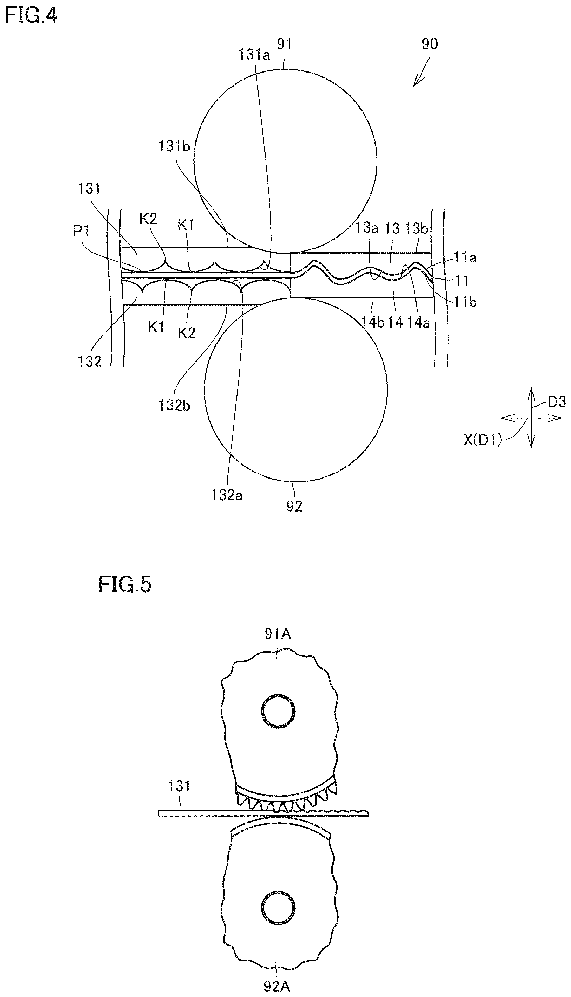

First cathode film 13 and second cathode film 14 are configured of positive electrode films 131 and 132 (see Fig. 4), respectively, which include a positive active material. Note that since second surfaces 13b and 14b of first cathode film 13 and second cathode film 14 are flat, the winding of positive electrode 10 is facilitated.

Since negative electrode 20 has substantially the same configuration as positive electrode 10, a developed view and a cross-sectional view, etc. of negative electrode 20 are not shown. However, negative electrode 20, when expanded, has a belt-like shape extending along the longitudinal direction as well. Negative electrode 20 has a first end and a second end in the longitudinal direction. The first end is the end (the inner peripheral end of the winding) located on the inner peripheral side of wound electrode assembly 1. The second end is the end (the outer peripheral end of the winding) located on the outer peripheral side of wound electrode assembly 1.

Again as shown in Fig. 1, negative electrode 20 includes a negative current collector 21, a first anode film 23, and a second anode film 24. For example, negative current collector 21 is configured of a metallic foil such as copper. Negative current collector 21 has a first primary surface 21a and a second primary surface 21b that are aligned in the direction of thickness of negative plate 20. In the state of wound electrode assembly 1, that is, when negative electrode 20 is wound, first primary surface 21a faces the inner peripheral side of wound electrode assembly 1, and second primary surface 21b faces the outer peripheral side of wound electrode assembly 1.

Negative electrode 20 has mixture non-forming portion 22a and a mixture forming portion. In mixture non-forming portion 22a, negative current collector 21 is exposed from both first anode film 23 and second anode film 24. Mixture forming portion is a portion of negative electrode 20 on which both first anode film 23 and second anode film 24 are formed. Mixture non-forming portion 22a extends from the mixture forming portion to the other side of the width direction. Mixture non-forming portion 22a, being wound, is exposed from the mixture forming portion to other side Z2 of axial direction Z of wound electrode assembly 1.

First anode film 23 is disposed on first primary surface 21a. First anode film 23 is disposed on first primary surface 21a so that the end portion of the first primary surface 21a on the other side of the width direction orthogonal to the longitudinal direction is exposed.

Second anode film 24 is disposed on second primary surface 21b. Second anode film 24 is disposed on second primary surface 21b so that the end portion of the second primary surface 21b on the other side of the width direction orthogonal to the longitudinal direction is exposed. Second anode film 24 is disposed overlapping the first anode film 23 in the direction of thickness of negative electrode 20. Second anode film 24 has approximately the same size as first anode film 23.

First anode film 23 has a first surface 23a affixed to negative current collector 21 and a second surface 23b located opposite the first surface 23a. First surface 23a of first anode film 23 has a wavy shape in which peaks and valleys alternate in the longitudinal direction. Second surface 23b, in contrast, is a flat surface.

Second anode film 24 has a first surface 24a affixed to negative current collector 21 and a second surface 24b located opposite the first surface 24a. First surface 24a of second anode film 24 has a wavy shape in which peaks and valleys alternate in the longitudinal direction. Second surface 24b, in contrast, is a flat surface. Since second surfaces 23b and 24b are flat, the winding of negative electrode 20 is facilitated.

With respect to first anode film 23 and second anode film 24, the relationship between: an average pitch between the peaks adjacent to each other in the longitudinal direction; and an average thickness of the anode film in the direction of thickness orthogonal to the longitudinal direction meets the same relationship as those with respect to first cathode film 13 and second cathode film 14 described above. Due to this, the lengths of cracks developed, due to the peaks and the valleys, in first anode film 23 and second anode film 24 along the longitudinal direction are reduced, thereby inhibiting the reduction in strength of first anode film 23 and second anode film 24.

Moreover, with respect to first anode film 23 and second anode film 24, the relationship between: the maximum distance between peaks and valleys in the direction of thickness of the anode film; and an average thickness of the anode film in the direction of thickness orthogonal to the longitudinal direction meets the same relationship as those with respect to first cathode film 13 and second cathode film 14. Due to this, the reduction in strength of first anode film 23 and second anode film 24 can further be inhibited.

### (Fabrication Process of Electrode)

Fig. 4 is a schematic view illustrating a process of fabrication of the positive electrode according to Embodiment 1. As shown in Fig. 4, positive electrode 10 can be fabricated by positive electrode films 131 and 132 being affixed to positive current collector 11.

Positive electrode film 131 has a first surface 131a and a second surface 131b aligned in thickness direction D3. First surface 131a has a wavy shape in which peaks and valleys are alternately continuous lengthwise. Second surface 131b is formed flat.

Positive electrode film 132 has a first surface 132a and a second surface 132b aligned in thickness direction D3. First surface 132a has a wavy shape in which peaks and valleys are alternately continuous lengthwise. Second surface 132b is formed flat.

Having positive electrode film 131 disposed on first primary surface 11a so that the first surface 131a having the wavy shape faces first primary surface 11a of positive current collector 11 and having positive electrode film 132 disposed on second primary surface 11b so that the first surface 132a having the wavy shape faces second primary surface 11b of positive current collector 11, these positive electrode films 131 and 132 and positive current collector 11 are pressed by a press unit 90, while being transferred.

Press unit 90 includes a pair of rollers 91 and 92. Positive current collector 11, having positive electrode film 131 disposed on first primary surface 11a and positive electrode film 132 disposed on second primary surface 11b, is pressed by the pair of rollers 91 and 92 as it passes between the pair of rollers 91 and 92. At this time, positive electrode film 131 is affixed to first primary surface 11a and positive electrode film 132 is affixed to second primary surface 11b.

Positive electrode film 131 includes peaks K1 and valleys K2 that are alternately continuous in longitudinal direction D1. Peaks K1 and valleys K2 are formed in first surface 131a of positive electrode film 131. Similarly, positive electrode film 132 has peaks K1 and valleys K2 that are alternately continuous in longitudinal direction D1. Peaks K1 and valleys K2 are formed in first surface 132a of positive electrode film 132.

Positive electrode film 131 and positive electrode film 132 are disposed in a manner that peaks K1 of positive electrode film 131 and positive electrode film 132 are staggered in longitudinal direction D1. With peaks K1 of positive electrode film 131 and valleys K2 of positive electrode film 132 facing one another in thickness direction D3 and valleys K2 of positive electrode film 131 and peaks K1 of positive electrode film 132 facing one another in thickness direction D3, positive electrode film 131 and positive electrode film 132 are disposed on positive current collector 11.

Due to this, as positive electrode film 131, positive current collector 11, and positive electrode film 132 are pressed, portions of positive current collector 11, between peaks K1 of positive electrode film 131 and valleys K2 of positive electrode film 132, protrude toward second surface 13b. Similarly, portions of positive current collector 11, between valleys K2 of positive electrode film 131 and peaks K1 of positive electrode film 132, recede into second surface 14b. In other words, positive current collector 11 has a wavy shape of a series of recesses and protrusions in longitudinal direction D1.

Following positive current collector 11 having the wavy shape noted above, first surface 131a of positive electrode film 131 turns into first surface 13a of a wavy shape having valleys V1 and peaks R1 as described above. Moreover, following positive current collector 11 of the wavy shape noted above, first surface 132a of positive electrode film 132 turns into first surface 14a of a wavy shape having valleys V2 and peaks R2 as described above.

Second surface 131b of positive electrode film 131, in contrast, turns into second surface 13b, while being kept flat. Second surface 132b of positive electrode film 132 turns into second surface 14b while being kept flat.

It should be noted that if second surfaces 131b and 132b cannot be kept flat, a separate planarization process may be included so that the second surfaces 131b and 132b turn into flat surfaces.

Fig. 5 is a schematic view illustrating a process of forming a positive electrode film for use in the positive electrode according to Embodiment 1. As shown in Fig. 5, to prepare positive electrode films 131 and 132 having wavy shapes in the above discussions, for example, positive electrode films 131 and 132 having flat, plate-like front and rear surfaces are allowed to pass between first roller 91A having an uneven surface and second roller 92A having a smooth surface. Due to this, positive electrode films 131 and 132 having wavy shapes are fabricated whose first surfaces 131a and 132a located on the first roller 91A side have wavy shapes, and second surfaces 131b and 132b located on the second roller 92A side are flat. First roller 91A may have a periodically uneven surface.

In the above discussions, first roller 91A has the uneven surface. However, the present disclosure is not limited thereto. Both first roller 91A and second roller 92A may have smooth surfaces. In this case, positive electrode films 131 and 132 having flat, plate-like front and rear surfaces may be allowed to pass between first roller 91A and second roller 92A, while ultrasonic vibrations are being applied, using an ultrasonic vibration apparatus, to one of first roller 91A and second roller 92A in directions in which the first roller 91A and second roller 92A face oppose to each other.

Note that since negative electrode 20 is formed substantially in the same manner as positive electrode 10, details of the fabrication process are omitted.

### (Electrode Film)

Positive electrode films 131 and 132 may be configured of a free-standing film. Similarly, the negative electrode film may be configured of a free-standing film too.

The free-standing film represents a film that can maintain the film profile by its own, without a support. The free-standing film can have a strength that can withstand the roll conveyance or the like, without a support such as a current collector described below. The range of the tensile strength of the free-standing film may have only an upper or lower limit or have upper and lower limits by selecting any one numeric value or any two numeric values from a group consisting of 0.1 MPa, 0.2 MPa, 0.3 MPa, 0.5 MPa, 0.6 MPa, 0.7 MPa, 0.8 MPa, 0.9 MPa, and 1.0 MPa, for example. The range may or may not be inclusive of its endpoints. The range of the tensile strength of the free-standing film may be, for example, from 0.1 MPa to 1.0 MPa. The range of the tensile strength of the free-standing film may be, for example, 0.5 MPa or greater. The free-standing film having the tensile strength of 0.5 MPa or greater is expected to facilitate, for example, web handling or the like.

The tensile strengths of the respective electrode films described above can be measured by the following method, for example. A test specimen is cut from an electrode film. The test specimen has a planar size of about 30 mm × 30 mm, for example. A tensile test is carried out on the test specimen at a speed of 2 mm/s by Texture Analyzer (e.g., manufactured by EKO INSTRUMENTS CO., LTD.). The maximum load during stretching of the test specimen is measured. The tensile strength is determined by the following equation. An arithmetic mean of three test specimens is employed as a tensile strength value. $Rm = \left(F\times 0.0098\right) / \left(t⋅W\right)$
Rm: Tensile Strength [MPa]
F: Maximum Load [g]
t: Thickness of Test Specimen [mm]
W: Width of Test Specimen [mm]

The electrode film can have any planner shape. The planner shape of the electrode film may be, for example, a belt-like shape, a rectangular shape, a round shape, etc. The dimensions (thickness, length, width, etc.) of the electrode film can be optionally modified, depending on an electrode design, for example. The range of thickness of the electrode film may have only an upper or lower limit or have upper and lower limits by selecting any one numeric value or any two numeric values from a group consisting of 5 µm, 10 µm, 25 µm, 50 µm, 75 µm, 100 µm, 150 µm, 200 µm, 250 µm, 300 µm, 400 µm, 500 µm, 600 µm, 700 µm, 800 µm, 900 µm, and 1000 µm, for example. The range may or may not be inclusive of its endpoints. The range of thickness of the electrode film may be, for example, from 5 µm to 1000 µm. The range of density of the electrode film may have only an upper or lower limit or have upper and lower limits by selecting any one numeric value or any two numeric values from a group consisting of 0.5 g/cm³, 1.0 g/cm³, 1.5 g/cm³, 2.0 g/cm³, 2.5 g/cm³, 3.0 g/cm³, 3.5 g/cm³, 4.0 g/cm³, 4.5 g/cm³, and 5.0 g/cm³, for example. The range may or may not be inclusive of its endpoints. The range of density of the electrode film may be, for example, from 0.5 g/cm³ to 5.0 g/cm³.

### (Compositions)

The electrode film includes an electrode active material and a first binder. The first binder includes a fibrous binder. In other others, the electrode film includes an electrode active material and a fibrous binder. The electrode film may further include, for example, a second binder, a conductive material, a solid electrolyte, etc. The electrode film may include, for example, 0.1% to 10% first binder, in mass fraction, 0 to 10% second binder, 0 to 10% conductive material, 0 to 30% solid electrolyte, and the remaining % electrode active material.

### (Electrode Active Material)

The electrode active material is a powder. For example, the electrode active material may exhibit a monomodal particle size distribution. The particle size distribution may be a volume distribution or a number distribution. The volume distribution can be measured by laser diffraction. The number distribution can be measured by microscopy. "D50" indicates the particle size achieving a cumulative frequency of 50% in a cumulative distribution. The range of D50 of the electrode active material may have only an upper or lower limit or have upper and lower limits by selecting any one numeric value or any two numeric values from a group consisting of 0.1 µm, 0.5 µm, 1 µm, 3 µm, 5 µm, 10 µm, 15 µm, 20 µm, 25 µm, and 30 µm, for example. The range may or may not be inclusive of its endpoints. For example, the range of D50 of the electrode active material may be from 0.1 µm to 30 µm.

For example, the electrode active material may exhibit a bimodal or multimodal particle size distribution. For example, if the particle size distribution (the frequency distribution) is bimodal, particles belonging to a peak having a larger particle size are "large particles." Particles belonging to a peak having a smaller particle size are "small particles." The mode diameter of each peak may be regarded as a particle size of each particle. The "mode diameter" indicates a particle size of a peak top of the frequency distribution. The range of "D_{L}/D_{S}," which is a ratio of the particle size "D_{L}" of larger particles to the particle size "D_{S}" of smaller particles, may have only an upper or lower limit or have upper and lower limits by selecting any one numeric value or any two numeric values from a group consisting of 1.2, 1.5, 2.0, 3.0, 4.0, and 5.0, for example. The range may or may not be inclusive of its endpoints. For example, a relationship such as "1.2 ≤ D_{L}/D_{S} ≤ 5.0" may be met.

The electrode active material may be primary particles or secondary particles. The electrode active material can have any particle shape. The particle shape may be, for example, a sphere shape, an ellipsoidal shape, a scale-like shape, a plate shape, a pillar shape, a massive shape, an unstructured shape, etc.

The electrode active material may be granules. The granules can be formed by any method. For example, granules may be formed by spray drying, stirring granulation, etc. The sphericity of the granules (the secondary particles) may be adjusted by granulation. The "sphericity" indicates circularity in an SEM image (a two-dimensional image). The sphericity (circularity) is determined by the following equation. An arithmetic mean of ten particles is employed as the sphericity. $ψ = 4 πS / {L}^{2}$
ψ: Sphericity (circularity)
π: Pi
S: Cross-sectional area of a particle (the area of a region surrounded by the particle contour)
L: Perimeter of Particles (the length of the particle contour)

The range of the sphericity "ψ" of the electrode active material may have only an upper or lower limit or have upper and lower limits by selecting any one numeric value or any two numeric values from a group consisting of 0.1, 0.2, 0.3, 0.4, 0.5, 0.6, 0.7, 0.8, 0.9, and 1.0, for example. The range may or may not be inclusive of its endpoints. For example, a relationship such as "0.1 ≤ ψ ≤ 1.0" may be met.

For negative electrode films, a negative active material is used as the electrode active material. The negative active material may include, for example, at least one selected from a group consisting of natural graphite (scale-like graphite, spherical graphite), artificial graphite, soft carbon, hard carbon, silicon, silicon oxide, a silicon-based alloy, a silicon-carbon composite material "Si-C," lithium silicate, tin, tin oxide, a tin-based alloy, and lithium titanate. For example, the spherical graphite may be covered with amorphous carbon. For example, natural graphite, artificial graphite, soft carbon, and hard carbon can be, collectively, referred to as "a carbon-based active material." The silicon can include any crystalline phase. The silicon may include at least one selected from a group consisting of a clathrate I-type phase, a clathrate II-type phase, and a diamond phase, for example. Si-C indicates composite particles including carbon and at least one of silicon and silicon oxide. For example, silicon may be supported in internal voids in carbon particles. The carbon particles may be graphite particles or amorphous carbon particles. For example, silicon, silicon oxide, a silicon-based alloy, and a silicon-carbon composite material can be, collectively, referred to as "an Si-based active material."

The negative active material may be, for example, a mixture of natural graphite and artificial graphite. The mass ratio "Natural Graphite: Artificial Graphite" may be, for example, in a range whose endpoints are defined by any two sets selected from a group consisting of "1:9," "2:8," "3:7," "4:6," "5:5," "6:4," "7:3," "8:2," and "9:1." For example, a relationship such as a mass ratio "Natural Graphite: Artificial Graphite = 1:9 to 9:1" may be met.

The negative active material may be, for example, a mixture of a carbon-based active material and an Si-based active material. The mass ratio "Carbon-based Active Material: Si-based Active Material" may be, for example, in a range whose endpoints are defined by any two sets selected from a group consisting of "1:99," "5:95," "10:90," "20:80," "30:70," "40:60," "50:50," "60:40," "70:30," "80:20," "90:10," "95:5," and "99:1." For example, a relationship such as a mass ratio "Carbon-based Active Material: Si-based Active Material = 1:99 to 99:1" may be met.

For positive electrode films, a positive active material is used as the electrode active material. The positive active material may include at least one selected from a group consisting of, for example, layered compounds, a rocksalt compound, a spinel compound, and an olivine-type compound. For example, the positive active material may be a mixture of the layered compounds and the olivine-type compound. The mass ratio "Layered Compounds: Olivine-type Compound" may be, for example, in a range whose endpoints are defined by any two sets selected from a group consisting of "1:9," "2:8," "3:7," "4:6," "5:5," "6:4," "7:3," "8:2," and "9:1." For example, a relationship such as a mass ratio "Layered Compounds: Olivine-type Compound = 1:9 to 9:1" may be met.

The positive active material may include at least one selected from a group consisting of, for example, Li[NiCoMn]O₂ (the layered compounds), Li[NiCoAl]O₂ (the layered compounds), LiMnO₂ (a rocksalt compound), Li[NiMn]₂O₄ (the spinel compound), and Li[MnFe]PO₄ (the olivine-type compound). Note that the recitation such as [NiCoMn] indicates that the sum of the ratios of the compositions in square brackets is 1. Insofar as the sum is 1, the respective components in square brackets can take any composition ratio. For example, the ratio of compositions of some components is allowed to be zero.

For example, the layered compounds may have a composition as given in general formula "LiₓNiₐCo_{b}M_{c}O_{y}," where the range of "x" may have only an upper or lower limit or have upper and lower limits by selecting any one numeric value or any two numeric values from a group consisting of 0.1, 0.2, 0.3, 0.4, 0.5, 0.6, 0.7, 0.8, 0.9, 1.0, 1.1, 1.2, 1.3, 1.4, and 1.5, for example. The range may or may not be inclusive of its endpoints. For example, a relationship such as "0.1 ≤ x ≤ 1.5" may be met. The **relationship** "a + b + c = 1" is met in the formula. Insofar as this relationship is met, the ranges of "a," "b," and "c" may, independently, have only an upper or lower limit or have upper and lower limits by selecting any one numeric value or any two numeric values from a group consisting of 0, 0.05, 0.1, 0.2, 0.3, 0.4, 0.5, 0.6, 0.7, 0.8, 0.9, and 1.0, for example. The range may or may not be inclusive of its endpoints. For example, relationships such as "0 ≤ a ≤ 1," "0 ≤ b ≤ 1," "0 ≤ c ≤ 1," etc. may be met. For example, relationships such as "0.5 ≤ a ≤ 0.9," "0.05 ≤ b ≤ 0.5," "0.05 ≤ c ≤ 0.5," etc. may be met. "M" in the formula may be at least one selected from a group consisting of Mn and Al, for example. The range of "y" in the formula may have only an upper or lower limit or have upper and lower limits by selecting any one numeric value or any two numeric values from a group consisting of 1.6, 1.7, 1.8, 1.9, 2.0, 2.1, 2.2, 2.3, and 2.4, for example. The range may or may not be inclusive of its endpoints. For example, a relationship such as "1.6 ≤ y ≤ 2.4" may be met.

The layered compounds may include at least one selected from a group consisting of LiₓNiO_{y}, LiₓCoO_{y}, LiₓMnO_{y}, LiₓNi_{1/3}Co_{1/3}Mn_{1/3}P_{y}, LiₓNi_{0.4}Co_{0.3}Mn_{0.3}O_{y}, LiₓNi_{0.5}Co_{0.2}Mn_{0.3}O_{y}, LiₓNi_{0.5}Co_{0.3}Mn_{0.2}O_{y}, LiₓNi_{0.5}Co_{0.4}Mn_{0.1}O_{y}, LiₓNi_{0.5}Co_{0.1}Mn_{0.4}O_{y}, LiₓNi_{0.6}Co_{0.3}Mn_{0.1}O_{y}, LiₓNi_{0.6}Co_{0.2}Mn_{0.2}O_{y}, LiₓNi_{0.6}Co_{0.1}Mn_{0.3}O_{y}, LiₓNi_{0.7}Co_{0.2}Mn_{0.1}O_{y}, LiₓNi_{0.7}Co_{0.1}Mn_{0.2}O_{y}, LiₓNi_{0.8}Co_{0.1}Mn_{0.1}O_{y}, LiₓNi_{0.8}Co_{0.15}Al_{0.05}O_{y}, and LiₓNi_{0.9}Co_{0.05}Mn_{0.05}O_{y}, for example. For example, relationships such as "0.1 ≤ x ≤ 1.5," "1.6 ≤ y ≤ 2.4," etc. may be met in the respective formulas.

For example, the olivine-type compound may have a composition as given in general formula "LiMPO₄," where "M" may be at least one selected from a group consisting of Fe, Ni, Co, and Mn, for example.

The olivine-type compound may have a composition as given in a general formula "LiₓMn₁₋ₐFeₐPO_{y}", for example, where the range of "x" may have only an upper or lower limit or have upper and lower limits by selecting any one numeric value or any two numeric values from a group consisting of 0.1, 0.2, 0.3, 0.4, 0.5, 0.6, 0.7, 0.8, 0.9, 1.0, 1.1, 1.2, 1.3, 1.4, and 1.5, for example. The range may or may not be inclusive of its endpoints. For example, a relationship such as "0.1 ≤ x ≤ 1.5" may be met. The range of "a" in the formula may have only an upper or lower limit or have upper and lower limits by selecting any one numeric value or any two numeric values from a group consisting of 0, 0.1, 0.2, 0.3, 0.4, 0.5, 0.6, 0.7, 0.8, 0.9, and 1.0, for example. The range may or may not be inclusive of its endpoints. For example, relationships such as "0 ≤ a ≤ 1.0," "0.1 ≤ a ≤ 0.5," etc. may be met. The range of "y" in the formula may have only an upper or lower limit or have upper and lower limits by selecting any one numeric value or any two numeric values from a group consisting of 3.6, 3.7, 3.8, 3.9, 4.0, 4.1, 4.2, 4.3, and 4.4, for example. The range may or may not be inclusive of its endpoints. For example, a relationship such as "3.6 ≤ y ≤ 4.4" may be met.

The olivine-type compound may include at least one selected from a group consisting of LiₓMnPO_{y}, LiₓMn_{0.9}Fe_{0.1}PO_{y}, LiₓMn_{0.8}Fe_{0.2}PO_{y}, LiₓMn_{0.7}Fe_{0.3}PO_{y}, LiₓMn_{0.6}Fe_{0.4}PO_{y}, LiₓMn_{0.5}Fe_{0.5}PO_{y}, LiₓMn_{0.4}Fe_{0.6}PO_{y}, LiₓMn_{0.3}Fe_{0.7}PO_{y}, LiₓMn_{0.2}Fe_{0.8}PO_{y}, LiₓMn_{0.1}Fe_{0.9}PO_{y}, and LiₓFePO_{y}, for example. For example, relationships such as "0.1 ≤ x ≤ 1.5," "3.6 ≤ y ≤ 4.4," etc. may be met in the respective formulas.

Any dopant may be introduced into the positive active material. The dopant may be an interstitial dopant or a substitutional dopant. The dopant may include at least one selected from a group consisting of B, C, N, halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid, for example. A mass fraction (the level of doping) of the dopant may have only an upper or lower limit or have upper and lower limits by selecting any one numeric value or any two numeric values from a group consisting of 0.01%, 0.1%, 1%, 3%, and 5%, for example. The range may or may not be inclusive of its endpoints. The range of the doping may be, for example, from 0.01% to 5%.

### (Conductive Material)

The conductive material can form an electron conductive path within the electrode film. The conductive material may include at least one selected from a group consisting of acetylene black, Ketjen black (registered trademark), thermal black, furnace black, carbon fiber, carbon nanotube, graphene flakes, metal fiber, and metal powders, for example. If the electrode active material is a positive active material, the group of materials that can constitute the conductive material may further include natural graphite, artificial graphite, etc., for example.

The conductive material may be, for example, a powder. The conductive material may have small D50, as compared to the electrode active material. The range of D50 of the conductive material may have only an upper or lower limit or have upper and lower limits by selecting any one numeric value or any two numeric values from a group consisting of 0.01 µm, 0.05 µm, 0.1 µm, 0.5 µm, 1 µm, 3 µm, and 5 µm, for example. The range may or may not be inclusive of its endpoints. The range of D50 of the conductive material may be, for example, from 0.01 µm to 5 µm.

The range of the mass fraction of the conductive material in the electrode film may have only an upper or lower limit or have upper and lower limits by selecting any one numeric value or any two numeric values from a group consisting of 0%, 0.1%, 0.5%, 1%, 2%, 3%, 4%, 5%, 6%, 7%, 8%, 9%, and 10%, for example. The range may or may not be inclusive of its endpoints. For example, the range of the mass fraction of the conductive material may be from 0% to 10%.

### (Solid Electrolyte)

The solid electrolyte can form an ionic conductive path within the electrode film. The solid electrolyte may include at least one selected from a group consisting of a sulfide solid electrolyte, a halide solid electrolyte, an oxide solid electrolyte, a hydride solid electrolyte, and a nitride solid electrolyte, for example. The sulfide solid electrolyte may include at least one selected from a group consisting of an amorphous phase, a crystalline phase, and a glass-ceramic (a crystallized glass) phase. The crystalline phase may be of argyrodite type, LGPS type, etc., for example. The sulfide solid electrolyte may include at least one selected from a group consisting of LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-GeS₂-P₂S₅, Li₂S-P₂S₅, Li₁₀GeP₂S₁₂, Li₄P₂S₆, Li₇P₃S₁₁, Li₃PS₄, and Li₇PS₆, for example. For example, "LiI-LiBr-Li₃PS₄" indicates a sulfide solid electrolyte that is generated by mixing LiI, LiBr, and Li₃PS₄ in any mass ratio. For example, the sulfide solid electrolyte may be generated by a mechanochemical method. The mixing ratio may be identified by prefixing a number to each raw material. For example, "10LiI-15LiBr-75Li₃PS₄" indicates that the mixing ratio (the mass ratio) is "LiI:LiBr:Li₃PS₄ = 10:15:75."

For example, the sulfide solid electrolyte may have a composition as given in general formula "yLiI-zLiBr-(100-y-z)[xLi₂S-(1-x)P₂S₅]," where the range of "x" may have only an upper or lower limit or have upper and lower limits by selecting any one numeric value or any two numeric values from a group consisting of 0.1, 0.2, 0.25, 0.3, 0.4, 0.5, 0.6, 0.7, 0.75, 0.8, and 0.9, for example. The range may or may not be inclusive of its endpoints. For example, a relationship such as "0.1 ≤ x ≤ 0.9" may be met. The relationship "0 < 100-y-z ≤ 100" is met in the formula. Insofar as this relationship is met, the ranges of "y" and "z" may, independently, have only an upper or lower limit or have upper and lower limits by selecting any one numeric value or any two numeric values from a group consisting of 0, 5, 10, 15, 20, 25, and 30, for example. The range may or may not be inclusive of its endpoints. For example, relationships such as "0 ≤ y ≤ 30," "0 ≤ z ≤ 30," etc. may be met.

For example, the sulfide solid electrolyte may have a composition as given in general formula "Li₄₋ₓM₁₋ₓPₓS₄," where the range of "x" may have only an upper or lower limit or have upper and lower limits by selecting any one numeric value or any two numeric values from a group consisting of 0, 0.1, 0.2, 0.3, 0.4, 0.5, 0.6, 0.7, 0.8, 0.9, and 1, for example. The range may or may not be inclusive of its endpoints. For example, a relationship such as "0 < x < 1" may be met. "M," in the formula, may include at least one selected from a group consisting of Al, Zn, In, Ge, Si, Sn, Sb, Ga, and Bi, for example.

For example, the sulfide solid electrolyte may have a composition as given in general formula "Li₁₀₊ₓGe₁₊ₓP₂₋ₓS₁₂," where the range of "x" may have only an upper or lower limit or have upper and lower limits by selecting any one numeric value or any two numeric values from a group consisting of 0, 0.1, 0.2, 0.3, 0.4, 0.5, 0.6, and 0.7, for example. The range may or may not be inclusive of its endpoints. For example, a relationship such as "0 < x ≤ 0.7" may be met. The sulfide solid electrolyte given in this formula may include an LGPS-type crystalline phase, for example.

For example, the halide solid electrolyte may have a composition as given in general formula "Li₆₋ₙₐMₐX₆," where "n" indicates an oxidation number of "M." "M" may include an atom having an oxidation number of +3, for example. "M," in the formula, may include an atom having an oxidation number of +4, for example. "M" may include at least one selected from a group consisting of Y, Al, Ti, Zr, Ca, and Mg, for example. For example, a relationship such as "0 < a < 2" may be met. "X," in the formula, may include at least one selected from a group consisting of F, Cl, Br, and I, for example.

The solid electrolyte may be, for example, a powder. The solid electrolyte may have small D50, as compared to the electrode active material. The range of D50 of the solid electrolyte may have only an upper or lower limit or have upper and lower limits by selecting any one numeric value or any two numeric values from a group consisting of 0.01 µm, 0.05 µm, 0.1 µm, 0.5 µm, 1 µm, 3 µm, and 5 µm, for example. The range may or may not be inclusive of its endpoints. The range of D50 of the solid electrolyte may be, for example, from 0.01 µm to 5 µm.

The range of the volume fraction of the solid electrolyte in the electrode film may have only an upper or lower limit or have upper and lower limits by selecting any one numeric value or any two numeric values from a group consisting of 0%, 1%, 5%, 10%, 20%, 30%, 40%, 50%, 60%, and 70%, for example. The range may or may not be inclusive of its endpoints. For example, the range of the volume fraction of the solid electrolyte may be from 0% to 70%.

### (First Binder)

The first binder includes a fibrous binder. The first binder may be, substantially, formed of a fibrous binder. For example, the fibrous binder may be a particulate binder (an aggregate) fiberized (fibrillated) by having a shear force or the like applied thereto. For example, as a mixture, including a particulate binder to be a fibrous binder and an electrode active material, passes through a roll gap, a shear force can be applied to the particulate binder. As the particulate binder turns into a fibrous binder, an electrode film can be deposited on the fibrous binder. The roll processing may be performed once or repeated multiple times. Prior to the roll processing, a shear force may be applied to the mixture by a jet mill, a stirring granulator, etc., for example. For example, in addition to the application of shear force, the mixture may be heated at a temperature in a range from 30°C to 150°C to promote the fibrillation of the particulate binder. The particulate binder may be fully or partially fibrillated. In other others, the first binder may contain particulate components too.

The "fibrous" indicates that the aspect ratio (a ratio of the major axial diameter to the minor axial diameter) is 10 or greater. Materials whose aspect ratio is less than 10 are regarded as being "particulate." A fibrous material may have an aspect ratio (a ratio of the fiber length to the fiber diameter) of 100 or greater, for example. The minor axial diameter, the major axial diameter, the fiber diameter, and the fiber length are measured by microscopy. An arithmetic mean of ten fibrous materials to be measured is employed as the aspect ratio. The short-side length and the long-side length of a minimum bounding rectangle "MBR" of the fibrous materials to be measured are regarded as the minor axial diameter and the major axial diameter, respectively. The fiber diameter indicates a dimension of a fibrous material to be measured in a direction orthogonal to the axial direction of the fibrous material to be measured. The fiber length indicates the entire length, in the axial direction, of the fibrous material to be measured.

The fibrous binder includes, for example, a polymer composition. The polymer composition may be a homopolymer, a copolymer, a polymer blend, or a polymer alloy. The fibrous binder may include, for example, polytetrafluorethylene (PTFE) or the like. In addition to PTFE, the fibrous binder may include an additional component. The additional component may include at least one selected from a group consisting of polyolefin, cellulose, polyether, and polysiloxane, for example. The additional component and the PTFE may form at least one selected from a group consisting of a polymer blend, a polymer alloy, and a copolymer. The range of the mass fraction of PTFE or the range of the mass fraction of tetrafluoroethylene (TFE)-derived component to the fibrous binder may have only an upper or lower limit or have upper and lower limits by selecting any one numeric value or any two numeric values from a group consisting of 0%, 10%, 20%, 30%, 40%, 50%, 60%, 70%, 80%, 90%, 95%, 99%, and 100%, for example. The range may or may not be inclusive of its endpoints. The range of the mass fraction of PTFE to the fibrous binder may be, for example, from 0% to 100%.

The range of a number-average molecular weight "Mn" of polymers constituting the fibrous binder may have only an upper or lower limit or have upper and lower limits by selecting any one numeric value or any two numeric values from a group consisting of 10 × 10⁴, 50 × 10⁴, 100 × 10⁴, 150 × 10⁴, 200 × 10⁴, 300 × 10⁴, 400 × 10⁴, 500 × 10⁴, 1000 × 10⁴, 2000 × 10⁴, and 3000 × 10⁴, for example. The range may or may not be inclusive of its endpoints. The range of the number-average molecular weight may be, for example, from 10 × 10⁴ to 3000 × 10⁴. The number-average molecular weight may be determined from a standard specific gravity, for example. A measurement specimen is prepared in conformity with "ASTM D-4895 98." The standard specific gravity is measured by a water displacement method in conformity with "ASTM D-792."

The range of the fiber diameter of the fibrous binder may have only an upper or lower limit or have upper and lower limits by selecting any one numeric value or any two numeric values from a group consisting of 1 nm, 5 nm, 10 nm, 15 nm, 20 nm, 50 nm, 100 nm, 200 nm, 500 nm, and 1000 nm, for example. The range may or may not be inclusive of its endpoints. The range of the fiber diameter may be, for example, from 1 nm to 1000 nm.

The fibrous binder can form a fiber matrix. For example, the film profile of an electrode film may be maintained by the fiber matrix holding an electrode active material (a powder). The fiber matrix may be evaluated by fiber density, for example. For example, the fiber density can be measured by the following method. A cross-sectional SEM image of an electrode film is prepared. A linear line of 20 µm is set at any position in the cross-sectional SEM image. Fibrous portions intersecting the linear line are counted, thereby determining the fiber density [unit: linear line/20 µm]. The fiber density is measured at three or more positions in the cross-sectional SEM image. An arithmetic mean of the three or more positions is employed as the fiber density. The range of the fiber density may have only an upper or lower limit or have upper and lower limits by selecting any one numeric value or any two numeric values from a group consisting of 1, 2, 5, 10, 20, 40, 60, 80, and 100, for example. The range may or may not be inclusive of its endpoints. The range of the fiber density may be, for example, from 1 to 100.

The range of the mass fraction of the first binder in the electrode film may have only an upper or lower limit or have upper and lower limits by selecting any one numeric value or any two numeric values from a group consisting of 0.1%, 0.5%, 1%, 2%, 3%, 4%, 5%, 6%, 7%, 8%, 9%, and 10%, for example. The range may or may not be inclusive of its endpoints. The range of the mass fraction of the first binder in the electrode film may be, for example, from 0.1% to 10%.

### (Second Binder)

The second binder can take any form. The second binder may take a form of particles, a film, fibers, etc., for example. For example, the second binder may have a stronger cohesive ability than the first binder. For example, an electrode film may be affixed to a current collector by the second binder. The second binder may include at least one selected from a group consisting of polyvinylidene fluoride (PVdF), vinylidene fluoride-co-hexafluoropropylene (PVdF-HFP), carboxymethyl cellulose (CMC), polyacrylic acid (PAA), polyvinyl alcohol (PVA), polyvinylpyrrolidone (PVP), polyethylene oxide (PEO), styrene-butadiene rubber (SBR), acrylonitrile-butadiene rubber (NBR), polyethylene (PE), polypropylene (PP), polyacrylonitrile (PAN), polyoxyethylene alkyl ether, polyimide (PI), polyamide imide (PAI), and derivatives thereof, for example.

The range of the mass fraction of the second binder in the electrode film may have only an upper or lower limit or have upper and lower limits by selecting any one numeric value or any two numeric values from a group consisting of 0%, 0.1%, 0.5%, 1%, 2%, 3%, 4%, 5%, 6%, 7%, 8%, 9%, and 10%, for example. The range may or may not be inclusive of its endpoints. The range of the mass fraction of the second binder in the electrode film may be, for example, from 0% to 10%.

A mass ratio "First Binder: Second Binder" may be, for example, in a range whose endpoints are defined by any two sets selected from a group consisting of "1:9," "2:8," "3:7," "4:6," "5:5," "6:4," "7:3," "8:2," "9:1," and "10:0." For example, a relationship such as a mass ratio "First Binder: Second Binder = 1:9 to 10:0" may be met.

### (Additional Components)

The electrode film may include any additional components. The additional components include, for example, an inorganic filler, an organic filler, a surface modification agent, a dispersant, a lubricant, a flame retardant, a protectant, flux, a coupling agent, an adsorbent, etc. The additional component may include, for example, polyoxyethylene allylphenyl ether phosphate, zeolite, a silane coupling agent, molybdenum sulfide, tungsten oxide, etc.

### (Variations)

In the above discussions, both first cathode film 13 and second cathode film 14 are configured of a free-standing film. However, the present disclosure is not limited thereto. One of first cathode film 13 and second cathode film 14 may be configured of a free-standing film.

Moreover, in the above discussions, the cathode film is disposed on opposing surfaces of positive current collector 11. However, the present disclosure is not limited thereto. The cathode film may be disposed on one surface of positive current collector 11 and the positive electrode mixture layer may be disposed on the other surface of positive current collector 11. In this case, the positive electrode mixture layer may be formed by positive current collector 11 being coated with slurry as is **conventional.**

Similarly, both first anode film 23 and second anode film 24 are configured of a free-standing film. However, the present disclosure is not limited thereto. One of first anode film 23 and second anode film 24 may be configured of a free-standing film.

Moreover, in the above discussions, the anode film is disposed on opposing surfaces of negative current collector 21. However, the present disclosure is not limited thereto. The negative may be disposed on one surface of negative current collector 21 and the negative electrode mixture layer may be disposed on the other surface of negative current collector 21. **In** this case, the negative electrode mixture layer may be formed by negative current collector 21 being coated with slurry as is conventional.

Moreover, either one of the positive electrode 10 and the negative electrode 20 may be formed by coating the current collector with slurry.

### (Appended Note)

As described above, the present embodiment includes disclosure as follows:

### [Configuration 1]

An electrode, comprising:
a current collector extending along a longitudinal direction of the current collector; and
an electrode film disposed on the current collector, wherein
the electrode film includes active material powders and a fibrillated binder,
the electrode film has a first surface affixed to the current collector and a second surface located opposite the first surface, wherein
the first surface has a wavy shape in which peaks and valleys alternate along the longitudinal direction, wherein
the electrode meets a relationship P ≤ T, where P is an average pitch between the peaks adjacent to each other in the longitudinal direction, and T is an average thickness of the electrode film in a thickness direction of the electrode orthogonal to the longitudinal direction.

### [Configuration 2]

The electrode according to Configuration 1, wherein
the second surface is a flat surface.

### [Configuration 3]

The electrode according to Configuration 1 or 2, further meeting a relationship 0.1T ≤ P.

### [Configuration 4]

The electrode according to any one of Configurations 1 to 3, further meeting a relationship 0.1T ≤ RT ≤ 0.5T, where RT is a maximum distance between the peaks and the valleys in the thickness direction.

### [Configuration 5]

The electrode according to any one of Configurations 1 to 4, wherein
the current collector has a wavy shape along the first surface.

### [Configuration 6]

The electrode according to any one of Configurations 1 to 5, wherein
the electrode film is a free-standing film in which the fibrillated binder supports the active material powders.

### [Configuration 7]

A secondary battery, comprising:
an electrode assembly including the electrode according to any one of Configurations 1 to 6; and
a housing case accommodating the electrode assembly.

While the embodiments according to the present disclosure have been described above, the presently disclosed embodiments should be considered in all aspects illustrative and not restrictive. The scope of the present disclosure is defined by the appended claims. All changes which come within the meaning and range of equivalency of the appended claims are to be embraced within their scope.

## Claims

1. An electrode (10), comprising:
a current collector (11) extending along a longitudinal direction (D1) of the current collector (11); and
an electrode film (13) disposed on the current collector (11), wherein
the electrode film (13) includes active material powders and a fibrillated binder,
the electrode film (139) has a first surface (13a) affixed to the current collector (11) and a second surface (13b) located opposite the first surface (13a), wherein
the first surface (13a) has a wavy shape in which peaks (K1, R1, R2) and valleys (V1) alternate along the longitudinal direction (D1), wherein
the electrode (10) meets a relationship P ≤ T, where P is an average pitch between the peaks (R1) adjacent to each other in the longitudinal direction (D1), and T is an average thickness of the electrode film (13) in a thickness direction (D3) of the electrode (10) orthogonal to the longitudinal direction (D1).

2. The electrode (10) according to claim 1, wherein
the second surface (13b) is a flat surface.

3. The electrode (10) according to claim 1 or 2, further meeting a relationship 0.1T ≤ P.

4. The electrode (10) according to any one of claims 1 to 3, further meeting a relationship 0.1T ≤ RT ≤ 0.5T, where RT is a maximum distance between the peaks (R1) and the valleys (V1) in the thickness direction (D3).

5. The electrode (10) according to any one of claims 1 to 4, wherein
the current collector (11) has a wavy shape along the first surface (13a).

6. The electrode (10) according to any one of claims 1 to 5, wherein
the electrode film (13) is a free-standing film in which the fibrillated binder supports the active material powders.

7. A secondary battery (100), comprising:
an electrode assembly including the electrode (10) according to any one of claims 1 to 6; and
a housing case (2) accommodating the electrode assembly.
